# EUROPEAN PATENT APPLICATION

(11) **EP 0 867 648 A2**
(43) Date of publication of application: **30.09.1998**
(21) Application number: 98302020.7
(22) Date of filing: 18.03.1998
(51) Int. Cl.: F16K 17/16

(54) **Bursting discs or bursting panels and methods for their manufacure**

(30) Priority: 25.03.1997 GB 9706160
(71) Applicant: IMI MARSTON LIMITED, Fordhouses Wolverhampton WV10 6QJ (GB)
(72) Inventor: Symonds, Keith Thomas, Codsall, Staffs, WV8 2EN (GB)
(74) Representative: Sykes, John Christopher

(57) **Abstract**

A composite reverse/buckling bursting disc having two or more domed metallic discs (11,12). The discs (11,12) are bonded together using patterns of welds which influence the burst pressure of the assembly. Such welds are typically associated with regions of one disc (11) which have grooves or slots (13), the grooved or slotted disc (11) being of greater thickness than the other disc (12). The invention enables more predictable bursting characteristics to be attained for discs which typically incorporate lines of weakness.

## Description

This invention relates to bursting discs or bursting panels. Such discs or panels have peripheral flanges which are generally supported between a pair of complementary supporting members around their periphery. Mounted in such supports, the discs or panels are conventionally used to permit controlled emergency venting of sudden over or under pressures from pipe lines or vessels. Controlled venting is intended to minimise damage which would otherwise occur to pipelines, valves or vessels.

Bursting discs or panels may be domed such that they have a convex and a concave surface. Where the concave surface faces the applied fluid pressure and opens in response to an increase in said pressure beyond a predetermined level, the device is described as a forward-acting bursting disc or panel. Where the convex surface faces the applied fluid pressure and opens in response to an increase in said pressure beyond a predetermined level, the device is described as a reverse-acting bursting disc or panel or a reverse buckling bursting disc or panel - see e.g. US patent 4,236,648. This type of disc allows the normal fluid pressure exerted on the disc to be relatively close to the pressure at which the disc is designed to rupture.

Typically a reverse buckling bursting disc is metallic and domed and has one or more lines of weakness in its surface. This permits predictable, fully vented pressure failures. The lines of weakness are typically created in these discs by removing or displacing metal in order to leave an accurately controlled thickness of parent metal within the weakness area.

Alternatively a domed disc having slots fully extending through its thickness may be employed together with one or more gas-tight membranes which may be of plastics material extending over the domed surface of the disc. These constructions are sometimes called "composite" discs see e.g. US 5,022,424. In the case of the discs which are not slotted, but have grooves or lines of weakness, as the thickness of the disc becomes greater and the core thickness at the base of the groove is diminished, it becomes increasingly difficult to achieve consistent tolerances and hence, predictable bursting characteristics.

It is an object of the invention to provide an improved bursting disc or panel.

In one aspect the invention provides a bursting disc or panel assembly comprising two or more metallic discs, characterised in that the discs are domed with each disc having a concave surface on a first side and a convex surface on an opposite second side, the first surface of one disc lying adjacent to the second surface of a neighbouring disc, the discs being bonded together using patterns or arrangements of welds which influence the burst pressure of the assembly.

According to another aspect of the invention we provide a bursting disc (or panel) assembly comprising two or more domed metallic discs, each disc having a concave and a convex surface, at least one of the discs having a region or regions in which grooves extend into said disc from either its convex surface or its concave surface, or slots extend through said disc, the discs being bonded together where said region or regions abut(s) one or more neighbouring discs.

The bonding may take place in a region offset by a small distance from a groove or slot. Alternatively it could be coincident with the line of the edge of the groove or slot. At least one of the discs may be of a thickness different from another disc. The grooved or slotted disc may have a thickness greater than any other disc.

One or more discs may have an annular flange portion, said flange portion being clampable within a disc holder. There may be an annular flange portion provided on a disc or discs which has/have no grooves or slots, and the slotted and/or grooved disc neighbouring such flanged disc or discs may comprise a number of segments, which may be separate from one another, but may be bonded each to the flanged disc. Typically where the slotted and/or grooved disc is flanged or unflanged, the bonding is between the concave surface of such a slotted or grooved disc and the convex surface of a neighbouring unslotted disc.

The bonding may be achieved by way of welding, for example by spot welding. Alternatively, adhesives, brazing, diffusion bonding or mechanical joining may be employed, depending upon the disc materials and thicknesses.

Where slots (which extend completely through the disc) are employed in one of the discs, at least some of the slots may be radially oriented. The slots may be of different lengths or widths depending upon the extent and rate of venting required. The slots may be discontinuous, i.e. small ligaments of metal may join the segments of a slotted disc. Different sizes of ligament may be used to alter the burst pressure associated with discs of the same size, material and thickness.

A slotted disc may be sandwiched between two thinner unslotted domed discs. One or another of the unslotted discs may be made of a metallic composition different from that of the slotted disc. The slotting may be carried out by etching (photochemical or electrochemical) or by the mechanical removal of material, or by laser cutting.

According to another aspect of the invention, we provide a method of manufacturing a bursting disc assembly comprising dishing two or more metallic discs together in intimate contact to a required height, one of the discs being thicker than any of the other discs; cutting slots in the thicker disc and re-assembling the thicker disc with the other disc or discs; and bonding together the discs along the periphery of the slot locations. A thinner inner disc may nest within a thicker outer disc, or vice versa.

The bonding is typically spot welded or a similar fusion weld technique and may preferably be carried out by welding into the thinner disc and penetrating into the thicker disc. The thickness of the thinner disc is calculated to be the core thickness which will vent upon bursting.

One embodiment of the present invention will now be described, by way of example only, with reference to the accompanying drawings in which;
Figure 1 is a plan view of a reverse buckling bursting disc assembly;
Figure 2 is a schematic cross-section in side elevation of the assembly seen in Figure 1; and
Figure 3 is an underside plan of the assembly shown in Figure 1.

The disc assembly shown in the drawings comprises two domed discs 11 and 12, each about 150 mm diameter and made of an alloy known as Inconel 600. Disc 11 is 1.5 mm thick and is slotted, i.e. it has slots passing through its thickness. There are four slots 13, each 5 mm wide and extending radially from the centre of disc 11, each at an angle of 90° to a neighbouring slot. Each slot 13 is radiused at its radially outer end. Centrally, where the slots join one another, there is a circular hole of 10 mm diameter. The slots 13 extend from the centre of disc 11 to a position close to (e.g. spaced by 5 mm from) the edge of the dome.

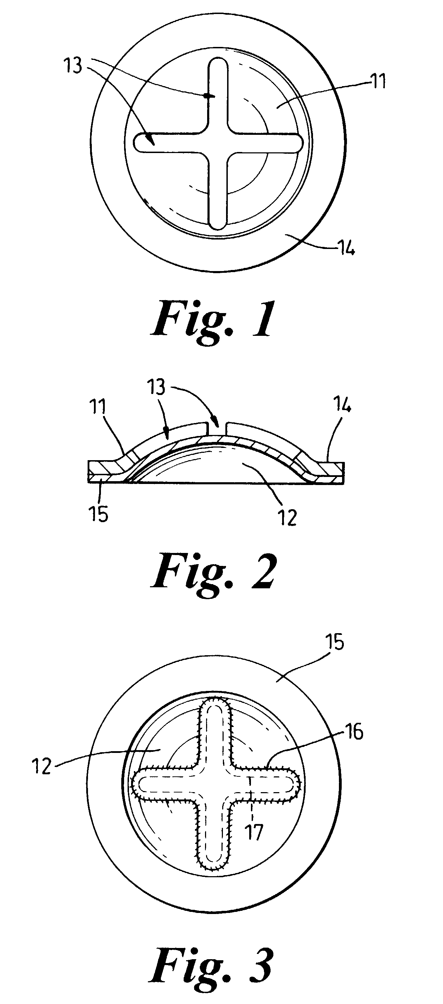

Disc 11 has an annular flange 14 of the same material and thickness extending from it. Flange 14 is flat (see Figure 2), and of substantially the same thickness as the dome of disc 11, and may be clamped between two parts of an annular holder (not shown) to hold the assembly in, for example, a pipe line.

The unslotted disc 12, which has a thickness of 0.5 mm, nests within the slotted disc 11, and has an annular flange 15, again of substantially the same thickness as disc 12. Discs 11 and 12 with their flanges 14, 15 are of substantially the same diameter, and the flanges 14, 15 abut one another. The radii of the respective domes of discs 11 and 12 differ by the thickness of the dome of disc 12.

Discs 11 and 12 with their flanges 14 and 15 are typically cut from circular blanks, each of uniform thickness. The blanks are dished whilst held in contact with one another by known fluid pressure techniques. The discs are then separated and disc 11 is slotted using known mechanical stamping, photo chemical etching means, or by laser cutting. After removing any burrs, discs 11 and 12 are brought together again in a jig with the unslotted disc 12 nesting within slotted disc 11. They are then bonded together in the region shown using a spot welding technique from the inside of unslotted disc 12 to the discs, as indicated by weld zone 16 seen in Figure 3. Dashed line 17 indicates the position of the edges of slots 13 in disc 11. Zone 16 is a continuous weld line extending around the ends of where each slot 13 is located on disc 12. The weld line is 1.0 mm offset radially outwardly from the line of the edge of slots 13. The weld penetration is such that the slotted disc bears a faint witness mark on its convex side. The "double disc" is then pressure tested for its particular service application.

The bonding technique when using welding may be controlled to have the weld line either coincident with the line of the edge of slots 13, or it may be slightly offset.

The invention is applicable to any form of domed bursting disc or panel, whether forward acting or reverse buckling.

## Claims

1. A bursting disc or panel assembly comprising two or more metallic discs (11,12), characterised in that the discs (11,12) are domed with each disc having a concave surface on a first side and a convex surface on an opposite second side, the first surface of one disc lying adjacent to the second surface of a neighbouring disc, the discs being bonded together using patterns or arrangements of welds (17) which influence the burst pressure of the assembly.

2. A bursting disc or panel as claimed in claim 1 characterised in that at least one of the discs (11) has a region or regions in which grooves extend into said disc from either its convex surface or its concave surface, or slots (13) extend through said disc, the discs (11,12) being bonded together where said region or regions abut(s) one or more neighbouring discs.

3. A bursting disc or panel as claimed in claim 2 characterised in that the bonding takes place in a region offset by a small distance from a groove or slot (13).

4. A bursting disc or panel as claimed in claim 2 characterised in that the bonding is coincident with the line of the edge of the groove or slot (13).

5. A bursting disc or panel as claimed in claims 2 to 4 characterised in that at least one of the discs (11,12) is of a thickness different from another disc.

6. A bursting disc or panel as claimed in claim 5 characterised in that the grooved or slotted disc (11) has a thickness greater than any other disc (12).

7. A bursting disc or panel as claimed in any preceding claim characterised in that one or more discs has an annular flange portion (15), said flange portion (15) being clampable within a disc holder.

8. A bursting disc or panel as claimed in claim 7 characterised in that there is an annular flange portion (15) provided on a disc (12) or discs which has/have no grooves or slots, and the slotted and/or grooved disc (11) neighbouring such flanged disc or discs comprises a number of segments, which are separate from one another, but may be bonded each to the flanged disc.

9. A bursting disc or panel as claimed in any preceding claim characterised in that the slots (13) are discontinuous, i.e. small ligaments of metal join the segments of a slotted disc with different sizes of ligament being used to alter the burst pressure associated with discs of the same size, material and thickness.

10. A method of manufacturing a bursting disc assembly comprising dishing two or more metallic discs (11,12) together in intimate contact to a required height, one of the discs (11) being thicker than any of the other discs; cutting grooves or slots (13) in the thicker disc (11) and re-assembling the thicker disc (11) with the other disc (12) or discs; and bonding together the discs in the region of said grooves or slots (13).
